# EUROPÄISCHE PATENTSCHRIFT

(11) **EP 4 337 882 B1**
(45) Veröffentlichungstag und Bekanntmachung des Hinweises auf die Patenterteilung: **22.07.2026**
(21) Anmeldenummer: 22728424.7
(22) Anmeldetag: 09.05.2022
(51) Int. Cl.: F16L 33/22, F16L 37/098, F16L 37/138

(54) **ANSCHLUSSSYSTEM UND VERFAHREN ZUR MONTAGE EINES ANSCHLUSSYSTEMS**
CONNECTION SYSTEM AND METHOD FOR ASSEMBLING A CONNECTION SYSTEM
SYSTÈME DE RACCORDEMENT ET PROCÉDÉ D'ASSEMBLAGE D'UN SYSTÈME DE RACCORDEMENT

(30) Priorität: 14.05.2021 DE 102021112614
(43) Veröffentlichungstag der Anmeldung: 20.03.2024
(73) Patentinhaber: Voss Automotive GmbH, 51688 Wipperfürth (DE)
(72) Erfinder: BRÜGGER, Jens, 58553 Halver (DE); AHOURI, Mustapha, 58507 Lüdenscheid (DE)
(74) Vertreter: Dr. Solf & Zapf Patent- und Rechtsanwalts PartG mbB
(86) Internationale Anmeldenummer: PCT/EP2022/062445
(87) Internationale Veröffentlichungsnummer: WO 2022/238306

(56) Entgegenhaltungen:
- EP-A1- 1 380 791
- DE-A1- 102014 107 530
- FR-A1- 2 784 166
- GB-A- 2 349 437

## Beschreibung

Die Erfindung betrifft ein Anschlusssystem zum Anschluss an einen Verbindungsstutzen. Verbindungsstutzen sind im Stand der Technik in einer Vielzahl von Ausgestaltungen bekannt und werden auch als Schlauchstutzen bezeichnet. Aus dem Stand der Technik bekannte Systeme werden beispielsweise bei Kühlwassersystemen zur Kühlung von Kraftfahrzeugmotoren verwendet. Die Systeme werden beispielsweise zur Verbindung eines Kühlwasserbehälters mit einem Verbindungsstutzen und einem Wärmeübertrager verwendet.

Bekannte Verbindungsstutzen, verfügen üblicherweise über mindestens eine Anformkontur, die beispielsweise als umlaufende Erhebung ausgebildet ist. Verbindungsstutzen sind beispielsweise an einem Rohr oder an einem Behälter befestigt oder ausgebildet und dienen dem Anschluss, beispielsweise einer Schlauchleitung. Zum Herstellen einer Fluidleitungsverbindung mit dem Verbindungsstutzen wird beispielsweise ein Schlauch auf den Verbindungsstutzen aufgeschoben und der Schlauch mit einer Klemmschelle oder einem Pressring auf dem Verbindungsstutzen befestigt. Die Klemmschelle oder der Pressring ist hinter der Anformkontur angeordnet und verhindert dadurch, dass der Schlauch über die Anformkontur von dem Verbindungsstutzen abrutscht und gewährleistet eine fluiddichte Verbindung.

Der Stand der Technik in Form von DE 37 27 908 A1 offenbart beispielsweise eine Schlauchverbindungsanordnung mit einem Rohrstutzen, der eine Anformkontur in Form einer Wulst aufweist. Auf den Rohrstutzen mit der Wulst wird ein Schlauch aufgeschoben, der mit einer Schlauchklemme fixiert wird.

Aus der gattungsbildenden DE 10 2014 107 530 A1 ist eine Fluid-Steckkupplung bekannt, die ein Aufnahmeteil und ein Halteteil aufweist. Das Halteteil weist mindestens einen radial federelastisch aufspreizbaren Haltearm zum rastenden Hintergreifen der Haltestufe auf. Ferner weist das Halteteil einen axial abstehenden, radial federelastisch aufspreizbaren Schnapparm zum rastenden Hintergreifen einer auf dem Außenumfang des Muffenteils liegenden Raststufe auf, welcher konzentrisch mit dem radial federelastisch aufspreizbaren Haltearm zum rastenden Hintergreifen der Haltestufe des Steckerteils liegt.

EP 1 380 791 A1 beschreibt eine Steckkupplung zum Verbinden zweier Fluidleitungen, von denen eine eine Halterippe aufweist. Ferner weist die Steckkupplung eine Hülse mit Durchbrüchen und eine in der Hülse verschiebbare Rasteinrichtung mit Rastarmen auf. Darüber hinaus sind Haken zum Hintergreifen der Halterippe und eine äußere Schrägfläche vorgesehen.

GB 2 349 437 A offenbart eine Verbindungsanordnung, um zwei Schläuche miteinander zu verbinden. Hierzu umfasst die Verbindungsanordnung unter anderem Verriegelungsmittel, die um die Außenseite der beiden Rohreinrichtungen herum angeordnet sind und erste flexible Schellenmittel, die sich über die Außenseite der ersten Rohreinrichtung erstrecken und mit dieser in Eingriff gebracht werden können.

Aus FR 2 784 166 A1 ist eine Anordnung zur Verbindung von einem Endstück und einer Rohrleitung bekannt. Hierzu ist das Rohr an einem hinteren freien Ende axial geschlitzt. Ferner umgibt eine flexible Hülse das freie Endstück und ist durch eine Schelle gesichert.

Die aus dem Stand der Technik bekannten Systeme weisen den Nachteil auf, dass insbesondere die Schlauchleitungen oftmals aus kostenintensiven Werkstoffen hergestellt sind und die Montage der Systeme nur unter Zuhilfenahme von Werkzeug möglich ist.

Der vorliegenden Erfindung liegt daher die Aufgabe zugrunde, ein Anschlusssystem und ein Verfahren zur Montage eines Anschlusssystems anzugeben, bei denen auf die Verwendung von Werkzeugen verzichtet werden kann, und die kostengünstig herstellbar sind.

Die vorgenannte Aufgabe ist gelöst mit einem Anschlusssystem gemäß Anspruch 1. Das Anschlusssystem dient dem Anschluss an einen Verbindungsstutzen. Der Verbindungsstutzen weist zumindest ein kreiszylindrisches Rohrelement auf, das an einem ersten Ende mindestens eine Anformkontur, vorzugsweise in Form einer über den Umfang verlaufenden Erhebung, aufweist. Der Verbindungsstutzen ist insbesondere rotationssymmetrisch ausgebildet. Vorzugsweise ist beabstandet zum ersten Ende ferner zumindest ein Anschlagkragen vorgesehen. Der Anschlagkragen ist beispielsweise durch einen Behälter oder ein Bauteil realisiert, mit dem der Verbindungsstutzen einseitig verbunden ist. Es ist auch vorgesehen, dass der Verbindungsstutzen, insbesondere zumindest am ersten Ende, anschlagkragenfrei ausgebildet ist. Der Verbindungsstutzen weist mindestens einen Fluidkanal auf, der mit dem Anschlusssystem verbindbar ist.

Das erfindungsgemäße Anschlusssystem weist mindestens ein Fluidleitungselement und mindestens ein Halteelement auf. Das Fluidleitungselement ist beispielsweise als Rohr- oder Schlauchleitung ausgebildet. Vorzugsweise ist die Rohr- oder Schlauchleitung zumindest teilweise als Wellrohrleitung ausgebildet. Das Fluidleitungselement stellt mindestens einen Fluidkanal bereit, der insbesondere mit dem Fluidkanal eines Verbindungsstutzens verbunden werden soll bzw. wird. Das Fluidleitungselement ist zumindest an einem ersten Ende, insbesondere auch an einem zweiten Ende, rohrförmig ausgebildet und weist auf seinem Außenumfang ein Umfangsrastmittel auf. Zumindest an dem ersten Ende, insbesondere auch einem zweiten Ende, weist das Fluidleitungselement einen kreisförmigen Querschnitt auf.

Das Umfangsrastmittel ist beispielsweise als Rastvorsprung, beispielsweise als Rastkante, oder als Rastrücksprung, beispielsweise als Nut, ausgebildet. Das Umfangsrastmittel weist vorzugsweise einen Abstand zu einer Stirnfläche des Fluidleitungselements am ersten Ende auf. Beispielsweise ist das Umfangsrastmittel als endseitige, lokale Aufweitung des Fluidleitungselements ausgebildet, an deren Übergang zum kleineren Durchmesser eine Rastkante ausgebildet ist.

Vorzugsweise ist der Durchmesser des Fluidleitungselementes am ersten Ende gegenüber dem anschließenden Verlauf erweitert ausgebildet. Beispielsweise ist der Innendurchmesser am ersten Ende zwischen 5 % und 20 % größer als im unmittelbar anschließenden Verlauf des Fluidleitungselements.

Das Halteelement definiert mindestens einen Aufnahmeraum zur Aufnahme eines Verbindungsstutzens. Vorzugsweise ist zumindest ein Abschnitt des Verbindungsstutzens ausgehend von der Anformkontur und weg von dem Ende mit der Anformkontur in den Aufnahmeraum aufnehmbar. Bevorzugt ist zumindest ein Abschnitt des Verbindungsstutzens zwischen der mindestens einen Anformkontur und dem mindestens einen Anschlagkragen in den Aufnahmeraum aufnehmbar. Das Halteelement ist beispielsweise im Wesentlichen hülsenartig ausgebildet. Insbesondere umgibt das Halteelement den Aufnahmeraum. An einem ersten Ende des Halteelements ist vorzugsweise mindestens ein Haltekragen ausgebildet, der sich in radialer Richtung nach außen weg erstreckt und eine Mehrzahl parallel zu einer Halteelementlängsachse verlaufender Kragenrastmittel aufweist. Die Kragenrastmittel erstrecken sich folglich beabstandet zum Aufnahmeraum und zu einem Außendurchmesser des Halteelements. Die Kragenrastmittel erstrecken sich vorzugsweise ausgehend von einer ersten Stirnfläche des Halteelements parallel zur Längsachse des Halteelements. Vorzugsweise sind zwischen sechs und zehn Kragenrastmittel vorgesehen, insbesondere sind acht Kragenrastmittel vorgesehen.

Der Außendurchmesser des Halteelements und der Innendurchmesser des Fluidleitungselements sind derart ausgebildet und dimensioniert, dass das Halteelement an dem ersten Ende des Fluidleitungselements zumindest teilweise in das Fluidleitungselement einbringbar ist. Das Halteelement ist dabei so weit in das Fluidleitungselement einbringbar, bis die Kragenrastmittel des Halteelements verrastend mit dem Umfangsrastmittel auf dem Außenumfang des Fluidleitungselements zusammenwirken. Insbesondere ist das Halteelement so weit in das Fluidleitungselement einbringbar, bis die erste Stirnfläche des Fluidleitungselements an dem ersten Ende gegen den Haltekragen anliegt. Dabei übergreifen die Kragenrastmittel das Fluidleitungselement außenumfänglich. Das Halteelement hat insbesondere eine größere Erstreckung als die Kragenrastarme. Die Kragenrastarme haben etwa eine Länge, die etwa 1/5 bis 3/4 der Länge des Halteelements entspricht, bevorzugt etwa eine Länge von ¼ der Länge des Halteelements. Das Halteelement ragt beispielsweise im Montagezustand tiefer in das Fluidleitungselement hinein, als sich die Kragenrastarme auf dem Außenumfang des Fluidleitungselements erstrecken. Im Montagezustand ist der Aufnahmeraum vorzugsweise überwiegend, insbesondere mehr als 70%, mehr als 80%, mehr als 90% oder mehr als 95%, bevorzugt vollständig, innerhalb des Fluidleitungselements angeordnet.

Die radialelastischen ersten Stutzenrastmittel des Halteelements ragen zumindest teilweise in den Aufnahmeraum hinein und sind derart ausgebildet, dass sie einen kreiszylindrischen Abschnitt eines Verbindungsstutzens zentrierend und verkantungsfrei umfassen können. Insbesondere sind zwischen sechs und zehn erste Stutzenrastmittel, inbesondere acht erste Stutzenrastmittel, vorgesehen. Die ersten Stutzenrastmittel sind radialelastisch ausgebildet, damit diese beim Einbringen des Verbindungsstutzens in radialer Richtung nach außen - aus dem Aufnahmeraum heraus - ausweichen können, um bei der Montage über eine Anformkontur des Verbindungsstutzens, beispielweise in Form einer umlaufenden Erhebung, geführt zu werden. Vorzugsweise liegen die ersten Stutzenrastmittel im Montagezustand gegen die Anformkontur, insbesondere in Form einer umlaufenden Erhebung, am ersten Ende des Verbindungsstutzens an, bevorzugt um den Verbindungsstutzen in dem Aufnahmeraum des Halteelements zu halten.

Bei einer herkömmlichen Montage eines Schlauches mit Pressring wird dient die Anformkontur des Verbindungsstutzens als Halte- und Dichtkontur, an der eine Innenwand des Schlauches abdichtet - siehe eingangs zitierter Stand der Technik. Bei der vorliegenden Erfindung dient die Anformkontur der Anlage des Halteelements und damit dem axialen Abstützen des Verbindungsstutzens gegen das Halteelement.

Vorzugsweise ist das Fluidleitungselement an mindestens einem zweiten Ende identisch zum ersten Ende ausgebildet, so dass an jedem Ende des Fluidleitungselements ein beschriebenes Anschlusssystem ausgebildet werden kann.

Die Erfindung hat gegenüber dem Stand der Technik der Vorteil, dass die Montage und Demontage des Anschlusssystems an einem Verbindungsstutzen werkzeugfrei erfolgen kann, und dass die Bauteile, insbesondere das Fluidleitungselement, aus kostengünstigen Werkstoffen herstellbar sind. Insbesondere ist das Anschlusssystem mit bekannten, standardisierten Verbindungsstutzen kompatibel, so dass in einer Reparatur- oder Wartungssituation beispielsweise ein Austausch einer herkömmlichen Schlauchleitung mit Pressring durch ein erfindungsgemäßes Anschlusssystem erfolgen kann. Somit ist es mit der vorliegenden Erfindung nunmehr möglich, ein Fluidleitungselement mit einem Verbindungsstutzen zu verbinden. Die vorliegende Erfindung bietet gewissermaßen einen "Adapter", um ein Fluidleitungselement mit meinem standardisierten Verbindungsstutzen zu verbinden.

Gemäß einer ersten Ausgestaltung des Fluidleitungselements ist vorgesehen, dass mindestens ein Verriegelungselement vorhanden ist. Das Verriegelungselement ist beispielsweise im in das Fluidleitungselement eingebrachten Zustand des Halteelements derart zumindest mit den Kragenrastmitteln zusammenwirkbar aufbringbar ist, dass ein Lösen der Kragenrastmittel aus der Verrastung mit dem Umfangsrastmittel von dem Verriegelungselement verhindert wird.

Das Verriegelungselement ist vorzugsweise derart ausgebildet, dass es im in das Fluidleitungselement eingebrachten Zustand des Halteelements von außen auf die Kragenrastmittel aufbringbar ist. Das Verriegelungselement ist insbesondere umfänglich geschlossen ausgebildet. Im aufgebrachten Montagezustand wirkt das Verriegelungselement derart mit den Kragenrastmitteln zusammen, dass ein Lösen der Kragenrastmittel aus der Verrastung mit dem Umfangsrastmittel durch das Verriegelungselement verhindert wird. Das Verriegelungselement verhindert im Montagezustand auf den Kragenrastmitteln folglich, dass sich die rastende Verbindung zwischen Kragenrastmitteln und Umfangsrastmittel löst, wodurch das Halteelement in dem ersten Ende des Fluidleitungselements gehalten wird. Das Verriegelungselement verhindert insbesondere ein Ausfedern der Kragenrastmittel in radialer Richtung nach außen, wodurch die Verrastung mit dem Umfangsrastmittel gelöst würde. Das Verriegelungselement ist insbesondere länger als die Kragenrastmittel ausgebildet.

Gemäß einer weiteren Ausgestaltung des Anschlusssystems ist vorgesehen, dass eine Mehrzahl radialelastischer zweiter Stutzenrastmittel in den Aufnahmeraum ragen, insbesondere dass die ersten Stutzenrastmittel und die zweiten Stutzenrastmittel entlang einer Längsachse des Halteelements einen vorbestimmten Abstand zueinander aufweisen. Die zweiten Stutzenrastmittel ragen ebenfalls zumindest teilweise in den Aufnahmeraum und sind vorzugsweise dazu ausgebildet, sich auf einem kreiszylindrischen Außenumfang eines Verbindungsstutzens stabilisierend abzustützen, insbesondere um den Verbindungsstutzen zu halten. Vorzugsweise sind zwischen sechs und zehn zweiten Stutzenrastmittel, insbesondere acht zweite Stutzenrastmittel, vorgesehen.

Um im Montagezustand im Haltelement ein Verkippen des Verbindungsstutzens in Längsrichtung zu verhindern, ist vorzugsweise der Abstand entlang der Längsachse zwischen den ersten Stutzenrastmitteln und den zweiten Stutzenrastmitteln vorgesehen. Die zweiten Stutzenrastmittel sind ebenfalls radialelastisch ausgebildet, damit diese bei der Montage ebenfalls über die Anformkontur des Verbindungsstutzens geführt werden können. Vorzugsweise sind die zweiten Stutzenrastmittel derart ausgebildet, dass sie im Montagezustand zumindest teilweise gegen einen Anschlagkragen des Verbindungsstutzens anliegen.

Die Montage des Halteelements lässt sich insbesondere dadurch vereinfachen, dass gemäß einer weiteren Ausgestaltung vorgesehen ist, dass die ersten Stutzenrastmittel und die zweiten Stutzenrastmittel einstückig miteinander verbunden sind. Die ersten Stutzenrastmittel und die zweiten Stutzenrastmittel werden folglich beispielsweise einstückig gespritzt oder additiv gefertigt. Vorzugsweise ist vorgesehen, dass auch der Haltekragen einstückig mit den ersten Stutzenrastmitteln und/oder den zweiten Stutzenrastmitteln ausgebildet ist. Insbesondere ist vorgesehen, dass das Halteelement insgesamt einstückig ausgebildet ist.

Als besonders bevorzugt hat sich gemäß einer weiteren Ausgestaltung des Anschlusssystems herausgestellt, wenn vorgesehen ist, dass jedes erste Stutzenrastmittel einen ersten Rastarm und mindestens einen ersten Rastvorsprung aufweist, und dass der erste Rastvorsprung im Verlauf des ersten Rastarms, insbesondere in mindestens einem Endbereich des ersten Rastarms angeordnet ist. Ferner ist auch vorgesehen, dass der erste Rastvorsprung etwa auf der Hälfte der Erstreckung des ersten Rastarms angeordnet ist.

Bevorzugt weist jedes zweite Stutzenrastmittel jeweils einen zweiten Rastarm und mindestens einen zweiten Rastvorsprung auf, wobei der zweite Rastvorsprung im Verlauf des zweiten Rastarms, insbesondere in mindestens einem Endbereich des zweiten Rastarms angeordnet ist. Ferner ist auch vorgesehen, dass der zweite Rastvorsprung etwa auf der Hälfte der Erstreckung des zweiten Rastarms angeordnet ist.

Dadurch, dass die jeweiligen Rastvorsprünge im Verlauf der Rastarme angeordnet sind, kann die Radialelastizität der ersten Stutzenrastmittel und/oder der zweiten Stutzenrastmittel auf einfache Weise realisiert werden. Bevorzugt ist vorgesehen, dass sich die ersten Rastarme und die zweiten Rastarme ausgehend von einem im Wesentlichen kreiszylindrischen Mittelsteg des Halteelements in entgegengesetzte Richtungen erstrecken. Vorzugsweise erstrecken sich die ersten Rastarme und die zweiten Rastarme im Wesentlichen parallel zu einer Längsachse des Halteelements. Insbesondere sind die ersten Rastarme etwa doppelt so lang wie die zweiten Rastarme. Die ersten Rastarme und die zweiten Rastarme sind vorzugsweise über den Umfang des Halteelements gleichmäßig verteilt. Es ist ferner vorgesehen, dass die ersten Rastarme und die zweiten Rastarme auf dem Umfang zueinander versetzt angeordnet sind.

Beispielsweise entspricht die Anzahl der Kragenrastmittel der Anzahl der zweiten Stutzenrastmittel, insbesondere der zweiten Rastarme und zweiten Rastvorsprünge. Insbesondere sind die Kragenrastmittel und die zweiten Stutzenrastmittel konzentrisch zueinander angeordnet. Vorzugsweise sind die ersten Stutzenrastmittel, insbesondere die ersten Rastarme und ersten Rastvorsprünge, gleichmäßig versetzt zu den zweiten Stutzenrastmitteln angeordnet.

Die Stabilität der Montage eines Verbindungsstutzens im Aufnahmeraum des Halteelements lässt sich gemäß einer weiteren Ausgestaltung des Anschlusssystems dadurch steigern, dass die ersten Stutzenrastmittel derart ausgebildet und angeordnet sind, dass sie einen kreiszylindrischen Abschnitt eines Verbindungsstutzens stabilisierend umfassen. Dabei ist beispielsweise vorgesehen, dass jedes Stutzenrastmittel jeweils einen ersten Rastarm mit einem ersten Rastvorsprung aufweist, wobei die Rastvorsprünge der ersten Rastarme entlang des Umfangs an unterschiedlichen Positionen auf dem Rastarm angeordnet sind, so dass durch die unterschiedlichen Positionen entlang der Längsachse des Halteelements eine Stabilisierung gegen Verkippen des Verbindungsstutzens gegenüber dem Halteelement realisiert wird.

Besonders bevorzugt sind alle ersten Rastvorsprünge der ersten Rastarme an der gleichen Position auf jedem ersten Rastarm entlang der Längsachse L des Halteelements angeordnet. Die Stabilität eines einbringbaren Verbindungsstutzens wird durch die zweiten Stutzenrastmittel mit den zweiten Rastarmen und zweiten Rastvorsprüngen gewährleistet, die entlang der Längsachse zu den ersten Stutzenrastmitteln beabstandet sind.

Die Dichtwirkung des Anschlusssystems lässt sich erfindungsgemäß dadurch verbessern, dass das Halteelement mindestens ein über mindestens einen Umfang verlaufendes Dichtmittel aufweist. Vorzugsweise erstreckt sich das Dichtmittel mit mindestens einem Außendichtabschnitt auf einem Außenumfang des Halteelements, insbesondere zur dichtenden Anlage an einer Innenfläche des Fluidleitungselements.

Alternativ oder zusätzlich erstreckt sich das Dichtmittel mit mindestens einem Innendichtabschnitt auf mindestens einem Innenumfang des Halteelements, insbesondere im Bereich des Aufnahmeraums, insbesondere zur dichtenden Anlage an einen in den Aufnahmeraum einbringbaren Verbindungsstutzen. Vorzugsweise ist das Dichtmittel derart ausgestaltet, dass es sich sowohl mit einem Außendichtabschnitt über einen Außenumfang als auch mit einem Innendichtabschnitt über einen Innenumfang des Halteelements erstreckt. Insbesondere ist das Dichtmittel, nämlich der Außendichtabschnitt und der Innendichtabschnitt einstückig ausgebildet. Das Dichtmittel durchtritt das Halteelement dazu zumindest teilweise. Vorzugsweise ist das Dichtmittel an das Haltelement angespritzt oder angeformt, beispielsweise durch ein additives Fertigungsverfahren.

Die erfindungsgemäße Ausgestaltung des Anschlusssystems sieht zudem vor, dass das Halteelement und das Dichtmittel aus unterschiedlichen Materialien einstückig als Zweikomponentenbauteil ausgebildet sind. Das Dichtmittel wird folglich als zweite Komponente an das Halteelement angeformt oder angespritzt und ist nach dem Anspritzen oder Anformen einstückig mit dem Halteelement ausgebildet.

Als besonders vorteilhaft bei der Herstellung des Halteelements mit Dichtmittel hat sich gemäß einer weiteren Ausgestaltung des Anschlusssystems herausgestellt, wenn vorgesehen ist, dass das Halteelement eine Mehrzahl von Einspritzkanälen aufweist, und dass das Dichtmittel durch die Einspritzkanäle eingespritzt ist. Vorzugsweise ist vorgesehen, dass sich die Einspritzkanäle innerhalb der zweiten Rastarme der zweiten Stutzenrastmittel erstrecken. Beispielsweise sind die Einspritzkanäle parallel zur Längsachse des Halteelements ausgerichtet. Bevorzugt ist jeder Einspritzkanal mit mindestens einem sich radial nach innen und/oder nach außen erstreckenden Verbindungskanal verbunden, um ein Austreten des Dichtmittels während des Einspritzens zur Ausbildung des Außendichtabschnitts bzw. des Innendichtabschnitts zu gewährleisten. Die Einspritzkanäle sind nach dem Einspritzen mit Dichtmittel gefüllt und dadurch verschlossen.

Um vorteilhaft die Montage des Verbindungsstutzens zu vereinfachen, ist gemäß einer weiteren Ausgestaltung des Anschlusssystems vorgesehen, dass das Dichtmittel einen Innendichtabschnitt aufweist, der zumindest teilweise in den Aufnahmeraum hineinragt, und dass der Innendichtabschnitt einen Querschnitt mit einem flachen Montageflankenprofil in Richtung einer Einbringöffnung für den Verbindungsstutzen und einem steilen Blockadeflankenprofil auf einer von der Einbringöffnung abgewandten Seite aufweist. Im Querschnitt ist das Montageflankenprofil flacher als das Blockadeflankenprofil. Das Montageflankenprofil weist einen derart flachen Flankenwinkel auf, dass ein Verbindungsstutzen auf einfache Weise über den flacheren Flankenwinkel in den Aufnahmeraum einbringbar ist, wobei das Innendichtprofil ausreichend komprimiert wird, um die Anformkontur des Verbindungsstutzens passieren zu lassen. Bei einer entgegengesetzten Bewegung des Verbindungsstutzens aus dem Aufnahmeraum heraus verhindert das steilere Blockadeflankenprofil, ein Austreten des Verbindungsstutzens. Das Montageflankenprofil und/oder das Blockadeflankenprofil können mit einem Radius ausgebildet sein, wobei der Radius bei dem Montageflankenprofil im Verhältnis sehr groß und bei dem Blockadeflankenprofil sehr klein wäre.

Als insbesondere vorteilhaft für die Dichtwirkung hat sich herausgestellt, wenn gemäß einer weiteren Ausgestaltung vorgesehen ist, dass der Innendichtabschnitt und/oder der Außendichtabschnitt des Dichtmittels an einem im Wesentlichen umfangsmäßig geschlossenen Mittelsteg des Haltelements angeordnet sind. Vorzugsweise ist der Außendichtabschnitt und/oder der Innendichtabschnitt in einer Längsrichtung entlang der Längsachse des Halteelements zwischen den ersten Stutzenrastmitteln und den zweiten Stutzenrastmitteln angeordnet. Beispielsweise sind der Außendichtabschnitt und der Innendichtabschnitt an der gleichen Stelle entlang der Längsachse des Halteelements angeordnet.

Um ein zuverlässiges Sichern des Haltelements im ersten Ende des Fluidleitungselements zu gewährleisten, ist gemäß einer weiteren Ausgestaltung vorgesehen, dass das Verriegelungselement mit dem Haltekragen und/oder mit den Kragenrastmitteln des Halteelements verrastbar ist. Vorzugsweise ist am Haltekragen mindestens ein Rastrücksprung vorgesehen, der mit korrespondierenden Rastvorsprüngen am Verriegelungselement formschlüssig oder kraftformschlüssig verrastend zusammenwirkt. Auf diese Weise wird das Verriegelungselement in seiner Position fixiert.

Vorzugsweise weist das Verriegelungselement entlang seiner Längserstreckung einen ersten Abschnitt mit einem geringeren Durchmesser und einen zweiten Abschnitt mit einem größeren Durchmesser auf, wobei der zweite Abschnitt mit dem größeren Durchmesser vorzugsweise die Kragenrastmittel des Halteelements zumindest teilweise übergreifen kann. Der erste Abschnitt mit dem geringeren Durchmesser ist vorzugsweise an einem Außenumfang des, insbesondere aufgeweiteten, Fluidleitungselements anlegbar. Insbesondere ist zwischen dem Außenumfang des Fluidleitungselements und dem kleineren Durchmesser im ersten Abschnitt des Verriegelungselements eine Übergangspassung ausgebildet.

Das Verriegelungselement wird gemäß einer weiteren Ausgestaltung vorzugsweise dadurch weitergebildet, dass es eine Mehrzahl von Blockiervorsprüngen aufweist, und dass jeder Blockiervorsprung im montierten Zustand mit jeweils einem Kragenrastmittel zusammenwirkt. Das Verriegelungselement weist vorzugsweise eine der Anzahl der Kragenrastmittel entsprechende Anzahl an Blockiervorsprüngen auf. Die Blockiervorsprünge sind vorzugsweise im zweiten Abschnitt des Verriegelungselements mit einem größeren Durchmesser angeordnet, so dass jedes Kragenrastmittel von einem Blockiervorsprung übergreifbar ist. Wenn ein Kragenrastmittel von einem Blockiervorsprung übergriffen wird, kann das Kragenrastmittel nicht radial nach außen ausweichen und wird dadurch im verrasteten Zustand mit dem Umfangsrastmittel gehalten.

Eine ordnungsgemäße Montage des Anschlusssystems lässt sich gemäß einer weiteren Ausgestaltung vorteilhaft dadurch überprüfen, dass zwischen zwei Blockiervorsprüngen jeweils eine erste Ausnehmung ausgebildet ist, und dass zwischen zwei Kragenrastmitteln jeweils eine zweite Ausnehmung ausgebildet ist, und dass im Montagezustand die ersten und zweiten Ausnehmungen überdeckend ausgerichtet sind, so dass eine Anlage des Fluidleitungselements am Halteelement durch die Ausnehmungen optisch prüfbar ist. Jeder Blockiervorsprung liegt im Montagezustand in radialer Richtung über einem Kragenrastmittel, so dass die Stirnfläche des Fluidleitungselements und ein Teil des Außenumfangs des Fluidleitungselements durch die Ausnehmungen sichtbar ist und die Anlage der Stirnfläche am Haltekragen prüfbar ist. Dadurch wird die Betriebssicherheit des Anschlusssystems verbessert.

Als besonders vorteilhaft hat sich gemäß einer weiteren Ausgestaltung herausgestellt, wenn das Halteelement aus Polyamid 66 (PA66) mit einem Glasfaseranteil zwischen 0% und 50 %, insbesondere einem Glasfaseranteil von 30 % (GF30) hergestellt ist und/oder dass das Dichtmittel aus einem Elastomer, insbesondere einem Silikon-Elastomer gefertigt ist. Bevorzugt ist vorgesehen, dass das Dichtmittel ein Flüssigsilikonkautschuk, auch Liquid Silicon Rubber (LSR) genannt, aufweist, insbesondere aus diesem hergestellt ist. Diese Auswahl an Materialien gewährleistet eine vorteilhafte Herstellbarkeit bei zuverlässiger Stabilität.

Die Erfindung betrifft ferner ein Verfahren zur Montage eines Anschlusssystems zum Anschluss an einen Verbindungsstutzen, mit mindestens einem Halteelement und mindestens einem Fluidleitungselement, vorzugsweise nach einem der vorstehend beschriebenen Ausführungsbeispiele. Insbesondere ist zusätzlich mindestens ein Verriegelungselement vorgesehen.

Das Verfahren zeichnet sich dadurch aus, dass zumindest folgende Verfahrensschritte umfasst sind:
- Bereitstellen eines Verbindungsstutzens, der mit dem Anschlusssystem verbunden werden soll,
- Aufbringen eines Halteelements auf den Verbindungsstutzen, so dass erste Stutzenrastmittel des Haltelements an einer Anformkontur, insbesondere einer umlaufenden Erhebung, des Verbindungsstutzens anliegen, wodurch der Verbindungsstutzen in dem Halteelement gehalten wird,
- Einbringen des Halteelements in das Fluidleitungselement unter Verrastung von Kragenrastarmen mit mindestens einem Umfangsrastmittel auf einem Außenumfang des Fluidleitungselements.

Das Verfahren umfasst den Schritt des Bereitstellens eines Verbindungsstutzens, der mit dem Anschlusssystem verbunden werden soll. Der Verbindungsstutzen weist mindestens ein kreiszylindrisches, rohrförmiges Segment auf, auf dessen Außenumfang in einem ersten Endbereich mindestens eine Anformkontur ausgebildet ist. Vorzugsweise ist auch vorgesehen, dass beabstandet zur Anformkontur ferner mindestens ein Anschlagkragen vorgesehen ist. Beispielsweise ist der Verbindungsstutzen an einer Rohrleitung oder an einem Behälter ausgebildet oder montiert.

Das erfindungsgemäße Anschlusssystem ermöglicht ein Verbinden des Fluidleitungselements mit dem Verbindungsstutzen. Das Verfahren umfasst ferner den Schritt des Aufbringens eines Halteelementes auf den Verbindungsstutzen bzw. das Einbringen des Verbindungsstutzens in das Halteelement. Das Halteelement ist vorzugsweise wie vorstehend beschrieben ausgebildet. Das Einbringen des Verbindungsstutzens in das Halteelement erfolgt derart, dass die ersten Stutzenrastmittel des Halteelementes im aufgebrachten Zustand an der Anformkontur des Verbindungsstutzens anliegen, wodurch der Verbindungsstutzen in dem Halteelement festgelegt ist.

Vorzugsweise liegen auch die zweiten Stutzenrastmittel des Halteelementes an einem Anschlagkragen des Verbindungsstutzens an, so dass das Halteelement zwischen dem Anschlagkragen und der Anformkontur verspannt ist.

Ferner wird vorzugsweise ein Verriegelungselement, das insbesondere wie vorstehend beschrieben ausgebildet ist, auf das Fluidleitungselement aufgebracht, insbesondere auf das Fluidleitungselement aufgeschoben und in einer Vormontageposition gehalten. Der Außendurchmesser des Fluidleitungselementes und der kleinste Innendurchmesser des Verriegelungselementes sind derart aufeinander abgestimmt, dass das Verriegelungselement in einer Vormontageposition frei auf dem Fluidleitungselement bewegbar ist.

Ferner umfasst das Verfahren das Einbringen des Halteelementes zusammen mit den zumindest im Aufnahmeraum aufgenommenen Verbindungsstutzen in ein erstes Ende des Fluidleitungselementes unter Verrastung von Kragenrastarmen mit mindestens einem Umfangsrastmittel auf dem Außenumfang des Fluidleitungselementes. Dadurch wird das Halteelement in dem ersten Ende des Fluidleitungselementes fixiert. Die Kragenrastarme wirken formschlüssig oder kraftformschlüssig mit dem Umfangsrastmittel zusammen.

Um ein unbeabsichtigtes Lösen der Kragenrastarme aus der Verrastung mit dem Umfangsrastmittel zu verhindern, erfolgt gemäß einer Ausgestaltung vorteilhaft ein Aufschieben des Verriegelungselementes, insbesondere aus der Vormontageposition, zumindest auf die Kragenrastarme des Halteelementes, wodurch ein Lösen der Kragenrastmittel aus der Verrastung mit dem Umfangsrastmittel durch das Verriegelungselement verhindert wird. Beispielsweise verhindert das Verriegelungselement das radiale Ausweichen der Kragenrastmittel, um sich aus der Verrastung mit dem Umfangsrastmittel zu lösen.

Mit diesem Verfahren kann ein bekannter Verbindungsstutzen mit einem erfindungsgemäßen Anschlusssystem werkzeugfrei und lösbar verbunden werden.

Eine erste Ausgestaltung des Verfahrens sieht vor, dass vor dem Einbringen des Halteelementes in das Fluidleitungselement das Verriegelungselement auf dem Außenumfang des Fluidleitungselementes aufgebracht wird, insbesondere in eine Vormontageposition gebracht wird. Auf diese Weise befindet sich das Verriegelungselement bereits auf dem Außenumfang des Fluidleitungselementes und kann auf einfache Weise in Richtung des ersten Endes auf die Kragenrastmittel des Halteelementes aufgeschoben werden. Aus der Vormontageposition wird das Verriegelungsmittel entgegengesetzt zur Einbringrichtung des Halteelements auf die Kragenrastmittel aufgebracht.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel eines Anschlusssystems mit einem Verbindungsstutzen,
- Fig. 2: ein Ausführungsbeispiel eines Anschlusssystems mit einem Verbindungsstutzen in geschnittener Seitenansicht,
- Fig. 3: einen Teilausschnitt eines montierten Anschlusssystems in geschnittener Seitenansicht,
- Fig. 4: ein Ausführungsbeispiel eines Halteelementes in geschnittener Seitenansicht,
- Fig. 5a: ein Ausführungsbeispiel eines Halteelementes ohne angeformtes Dichtelement in Seitenansicht,
- Fig. 5b: ein Ausführungsbeispiel eines Halteelementes ohne angeformtes Dichtelement in Draufsicht,
- Fig. 5c: das freigestellte Dichtmittel für ein Halteelement gemäß Fig. 5a und 5b,
- Fig. 6: ein Ausführungsbeispiel eines Anschlusssystems mit einem Verbindungsstutzen in geschnittener Seitenansicht,
- Fig. 7: ein Ausführungsbeispiel eines Fluidleitungselementes in geschnittener Seitenansicht,
- Fig. 8: ein Ausführungsbeispiel eines Anschlusssystems mit Verbindungsstutzen während der Montage,
- Fig. 9: das Ausführungsbeispiel eines Anschlusssystems mit Verbindungsstutzen gemäß Fig. 8 während der Montage,
- Fig. 10: das Ausführungsbeispiel eines Anschlusssystems mit Verbindungsstutzen gemäß Fig. 8 und Fig. 9 im montierten Zustand, und
- Fig. 11: ein schematischer Ablauf eines Ausführungsbeispiels eines Verfahrens zur Montage eines Anschlusssystems.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

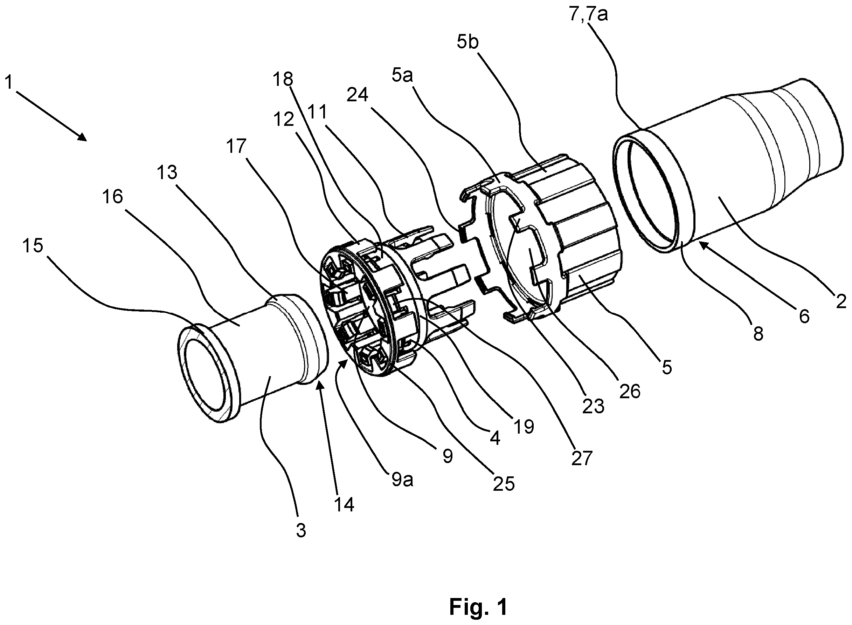

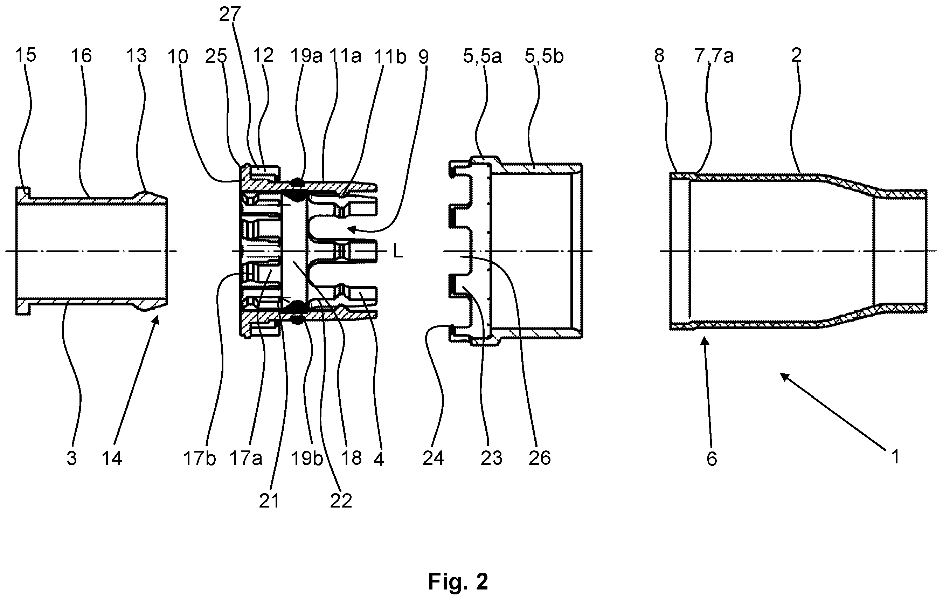

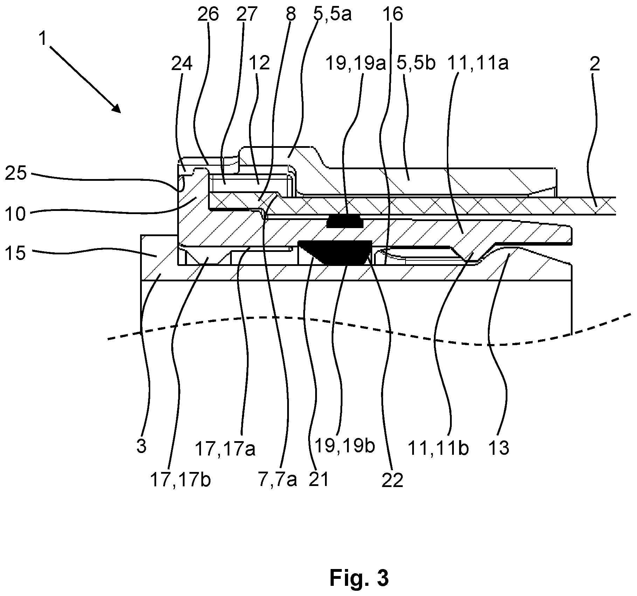

Fig. 1 zeigt ein Ausführungsbeispiel eines Anschlusssystems 1 in perspektivischer Ansicht. Fig. 2 zeigt das Ausführungsbeispiel gemäß Fig. 1 in geschnittener Seitenansicht. Fig. 3 zeigt einen Teilausschnitt des Ausführungsbeispiels der Fig. 1 und Fig. 2 im Montagezustand in geschnittener Seitenansicht. Das Anschlusssystem 1 ist zum Anschluss an einen aus dem Stand der Technik bekannten Verbindungsstutzen 3 geeignet und ausgebildet. Das Anschlusssystem 1 weist mindestens ein Fluidleitungselement 2, mindestens ein Halteelement 4 sowie mindestens ein Verriegelungselement 5 auf.

Das Fluidleitungselement 2 ist bei diesem Ausführungsbeispiel als Rohrleitung ausgebildet und weist an einem dargestellten ersten Ende 6 einen größeren Durchmesser gegenüber dem anschließenden Verlauf auf. Der Durchmesser ist bis zu 25% größer, vorzugsweise etwa 15% oder etwa 10 % größer. Ferner weist das Fluidleitungselement 2 endseitig eine lokale Aufweitung 8 auf, in deren Übergangsbereich an den geringeren Durchmesser auf dem Außenumfang ein Umfangsrastmittel 7 in Form einer Rastkante 7a ausgebildet ist. In Fig. 1 und Fig. 2 ist aus Gründen der Anschaulichkeit jeweils nur das erste Ende 6 des Fluidleitungselements 2 dargestellt.

Das Halteelement 4 ist im Wesentlichen hülsenartig ausgebildet und definiert einen Aufnahmeraum 9 zur Aufnahme des Verbindungsstutzens 3. Das Halteelement 4 verfügt über mindestens einen Haltekragen 10, der sich in radialer Richtung nach außen erstreckt (siehe insbesondere Fig. 2 und Fig. 3). Das Halteelement 4 weist ferner eine Mehrzahl radialelastischer erster Stutzenrastmittel 11 auf, die zumindest teilweise in den Aufnahmeraum 9 hineinragen.

Der Haltekragen 10 des Haltelements 4 weist eine Mehrzahl, insbesondere radialelastisch ausgebildeter, Kragenrastmittel 12 auf. Die Kragenrastmittel 12 erstrecken sich im Wesentlichen parallel zu einer Halteelementlängsachse L, die beispielsweise in Fig. 2 dargestellt ist, und weisen einen Abstand zu einem Außenumfang des Halteelements 4 auf, so dass das Fluidleitungselement 2 zumindest teilweise zwischen Außenumfang und Kragenrastmittel einbringbar ist (siehe insbesondere Fig. 3).

Das Halteelement 4 ist derart dimensioniert, dass es an dem ersten Ende 6 zumindest teilweise in das Fluidleitungselement 2 einbringbar ist (insbesondere dargestellt in Fig. 3, 6, 9 und 10). Während des Einbringens und im Montagezustand übergreifen die Kragenrastmittel 12 das Fluidleitungselement 2 außenumfänglich und verrasten mit dem Umfangsrastmittel 7, insbesondere mit der Rastkante 7a. Die Rastkante 7a ist vollumfänglich ausgebildet. Die Rastverbindung zwischen den Kragenrastmitteln 12, die hier als Kragenrastarme ausgebildet sind, und dem Umfangsrastmittel 7 ist kraftformschlüssig.

Das Verriegelungselement 5 weist gemäß Fig. 1 bis Fig. 3 einen ersten Abschnitt 5a und einen zweiten Abschnitt 5b auf. Der erste Abschnitt 5a weist einen größeren Durchmesser als der zweite Abschnitt 5b auf. Um das Verriegelungselement 5 bei der Montage greifen zu können, ist der Außenumfang des zweiten Abschnitts 5b mit Ausnehmungen ausgebildet. Der Innendurchmesser im ersten Abschnitt 5a ist größer als der Innendurchmesser im zweiten Abschnitt 5b. Das Verriegelungselement 5 ist derart ausgebildet, dass es im in das Fluidleitungselement 2 eingebrachten Zustand des Halteelementes 4 derart mit den Kragenrastmitteln 12 zusammenwirkbar auf die Kragenrastmittel 12 aufbringbar ist, dass ein Lösen der Kragenrastmittel 12 aus der Verrastung mit dem Umfangsrastmittel 7, insbesondere mit der Rastkante 7a, durch das Verriegelungselement 5 verhindert wird (siehe insbesondere Fig. 3).

Der Verbindungsstutzen 3 ist gemäß Fig. 1 bis 3 beispielsweise als Verbindungsstutzen 3 eines - nicht weiter dargestellten - Flüssigkeitsbehälters oder einer Rohrleitung ausgebildet. Der Verbindungsstutzen 3 weist eine umlaufende Anformkontur 13 in Form einer Erhebung an einem ersten Ende 14 sowie einen Anschlagkragen 15 auf. Zwischen dem Anschlagkragen 15 und der Erhebung 13 ist ein kreiszylindrischer Abschnitt 16 ausgebildet.

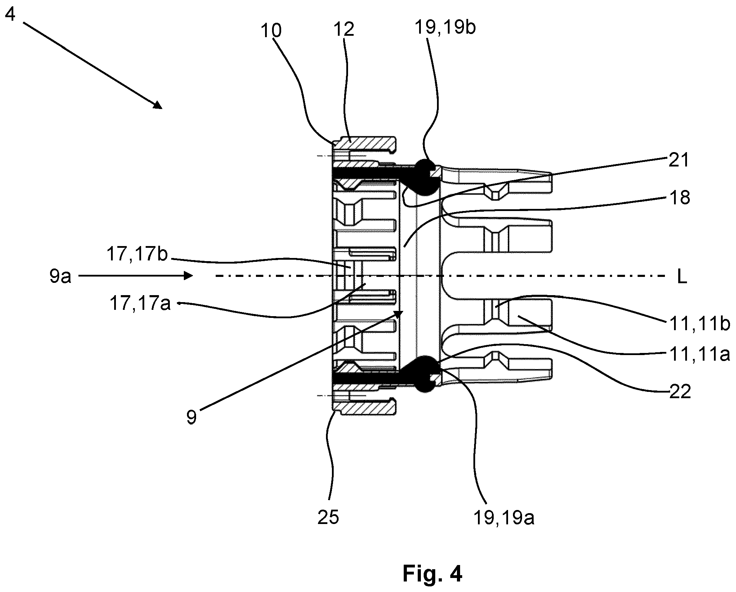

Fig. 4 zeigt ein Ausführungsbeispiel eines Halteelements 4 für ein Anschlusssystem 1, insbesondere gemäß Fig. 1 bis 3. Gemäß Fig. 1 bis 4 weist das Halteelement 4 ferner eine Mehrzahl radialelastischer zweiter Stutzenrastmittel 17 auf. Die ersten Stutzenrastmittel 11 und die zweiten Stutzenrastmittel 17 weisen entlang der Längsachse L des Halteelementes 4 einen vorbestimmten Abstand zueinander auf. Das Halteelement 4 ist bei diesem Ausführungsbeispiel einstückig ausgebildet, so dass die ersten Stutzenrastmittel 11 und die zweiten Stutzenrastmittel 17 einstückig mit dem Haltekragen 10 ausgebildet sind.

Jedes erste Stutzenrastmittel 11 weist einen ersten Rastarm 11a sowie einen ersten Rastvorsprung 11b auf. Der Rastvorsprung 11b ist im Verlauf des ersten Rastarms 11a angeordnet. Bei diesem Ausführungsbeispiel sind die ersten Rastvorsprünge 11b etwa auf der Hälfte der Länge der ersten Rastarme 11a angeordnet. Die ersten Rastarme 11a erstrecken sich im Wesentlichen parallel zur Längsachse L des Halteelementes 4.

Ferner weist das Halteelement 4 zweite Stutzenrastmittel 17 auf, die jeweils einen zweiten Rastarm 17a und einen zweiten Rastvorsprung 17b aufweisen. Die zweiten Rastvorsprünge 17b sind jeweils am Ende der zweiten Rastarme 17a angeordnet. Die ersten Rastarme 11a und die zweiten Rastarme 17a erstrecken sich ausgehend von einem Mittelsteg 18 des Halteelementes 4 in entgegengesetzte Richtungen parallel zur Längsachse L des Halteelementes 4.

Bei den dargestellten Ausführungsbeispielen sind genau acht erste Stutzenrastmittel 11 und genau acht zweite Stutzenrastmittel 17 vorgesehen. Die ersten Stutzenrastmittel 11 und die zweiten Stutzenrastmittel 17 sind derart ausgebildet und angeordnet, hier durch die ersten Rastvorsprünge 11b und die zweiten Rastvorsprünge 17b, dass sie den kreiszylindrischen Abschnitt 16 des Verbindungsstutzens 3 im Montagezustand stabilisierend umfassen. Der kreiszylindrische Abschnitt 16 wird zentriert zwischen den ersten und zweiten Rastvorsprüngen 11b, 17b gehalten. Die ersten und zweiten Rastvorsprünge 11b, 17b, weisen dazu entlang der Längsachse L einen vorbestimmten Abstand zueinander auf.

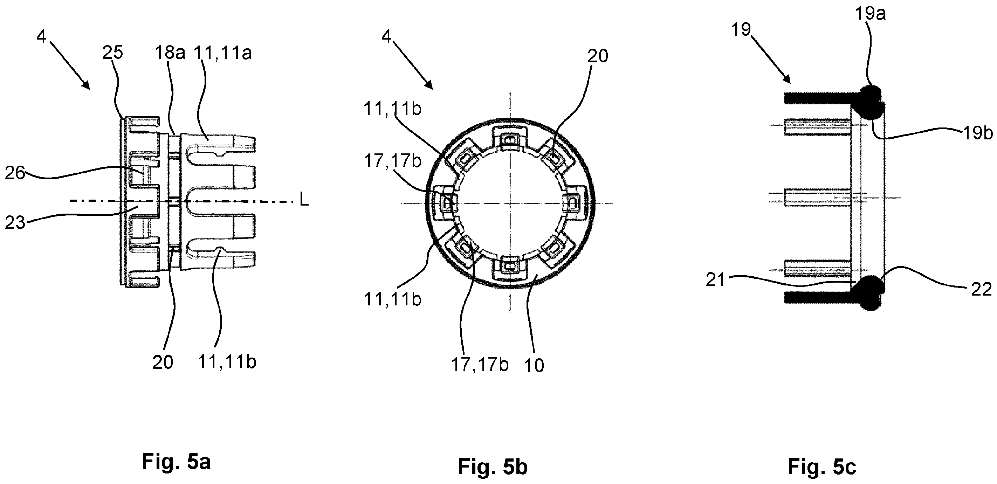

Fig. 5a und Fig. 5b zeigen ein Ausführungsbeispiel eines Haltelements 4 für ein Anschlusssystem 1, insbesondere gemäß Fig. 1 bis 3. Insbesondere Fig. 5b zeigt, dass die ersten Stutzenrastmittel 11 und die zweiten Stutzenrastmittel 17 gleichmäßig über den Umfang des Halteelements 4 verteilt und versetzt zueinander angeordnet sind. Die ersten Rastvorsprünge 11b und die zweiten Rastvorsprünge 17b bilden gemäß Fig. 5b eine gleichmäßige Greifkontur, um den kreiszylindrischen Abschnitt 16 eines Verbindungsstutzens 3 stabilisierend und verkippsicher zu umfassen (siehe insbesondere Fig. 3).

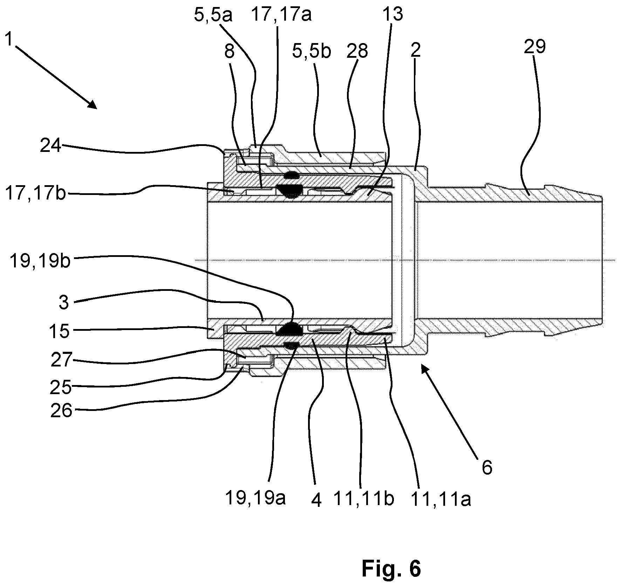

Gemäß Fig. 1 bis 4 und Fig. 6 weist das Halteelement 4 ein Dichtmittel 19 auf, das mit einem Außendichtabschnitt 19a auf einem Außenumfang zur dichtenden Anlage im Montagezustand an einer Innenfläche des Fluidleitungselementes 2 (siehe Fig. 3 und Fig. 6) und auf einem Innenumfang mit einem Innendichtabschnitt 19b zur dichtenden Anlage an einen in den Aufnahmeraum 9 einbringbaren Verbindungsstutzen 3 (siehe Fig. 3 und Fig. 6) ausgebildet ist. Der Innendichtabschnitt 19b und der Außendichtabschnitt 19a des Dichtmittels 19 sind einstückig miteinander verbunden. Das Dichtmittel 19 ist an das Halteelement 4 angespritzt, so dass das Halteelement 4 und das Dichtmittel 19 ein aus unterschiedlichen Materialien einstückig ausgebildetes Zweikomponentenbauteil bilden.

Fig. 5a und Fig. 5b zeigen ein Ausführungsbeispiel eines Halteelementes 4 in einem Zustand ohne angeformtes Dichtmittel 19. Das Dichtmittel 19 ist beispielhaft zum besseren Verständnis in Fig. 5c separat dargestellt. Das Halteelement 4 weist eine Mehrzahl von Einspritzkanälen 20 auf, die sich parallel zur Längsachse L des Halteelementes 4 erstrecken. Während der Herstellung wird das Dichtmittel 19 stirnseitig gemäß Fig. 5b in die Einspritzkanäle 20 eingebracht, wobei es am Außenumfang über eine Nut 18a, die mit den Einspritzkanälen 20 in Verbindung steht, nach außen tritt und den Außendichtabschnitt 19a bildet. Die Einspritzkanäle 20 sind ferner zum Innenumfang des Halteelementes 4 geöffnet, so dass sich gleichzeitig der Innendichtabschnitt 19b ausbildet. Im fertig eingespritzten Zustand sind gemäß der Schnittansicht in Fig. 4 die Einspritzkanäle 20 mit dem Dichtmittel 19 gefüllt und der Außendichtabschnitt 19a und der Innendichtabschnitt 19b sind vollständig ausgebildet.

Gemäß Fig. 3, 4 und 6 erstreckt sich das Dichtmittel 19 mit dem Innendichtabschnitt 19b zumindest teilweise in den Aufnahmeraum 9. Bei eingebrachtem Verbindungsstutzen 3 - gemäß Fig. 3 und 6 - liegt der Innendichtabschnitt 19b dichtend am kreiszylindrischen Abschnitt 16 des Verbindungsstutzens 3 an. Insbesondere um ein Einbringen des Verbindungsstutzens 3 zu erleichtern, weist der Innendichtabschnitt 19b einen Querschnitt flachen Montageflankenprofil 21 in Richtung der Einbringöffnung 9a für den Verbindungsstutzen 3 auf. Das Montageflankenprofil 21 ermöglicht ein einfaches Abgleiten der Anformkontur 13 des Verbindungsstutzens 3 und ein vorteilhaftes Komprimieren des Dichtmittels 19, um den Verbindungsstutzen einzubringen. Das gegenüberliegend angeordnete, steile Blockadeflankenprofil 22, hier mit einem kleinen Radius, verhindert im Montagezustand (insbesondere gemäß Fig. 3 und Fig. 6) bei einer Auszugsbewegung des Verbindungsstutzens 3 aus dem Aufnahmeraum 9 das Durchtreten der Anformkontur 13 auf einfache Weise. Das Dichtmittel 19, insbesondere der Innendichtabschnitt 19b und der Außendichtabschnitt 19a, ist gemäß Fig. 1, 2, 3 und 4 im Bereich eines im Wesentlichen umfangsmäßig geschlossenen Mittelsteges 18 des Halteelementes 4 angeordnet.

Gemäß Fig. 1, 2, 3 und 6 weist das Verriegelungselement 5 eine Mehrzahl von Blockiervorsprüngen 23 auf, wobei jeder Blockiervorsprung 23 im montierten Zustand mit jeweils einem Kragenrastmittel 12 zusammenwirkt. Die Blockiervorsprünge 23 übergreifen die Kragenrastmittel 12, so dass diese im verrasteten Zustand mit dem Umfangsrastmittel 7, insbesondere mit der Rastkante 7a, gehalten werden. Das Verriegelungselement 5 ist mit dem Halteelement 4 verrastbar. Um das Verriegelungselement 5 in Montageposition zu halten, ist gemäß Fig. 2 und Fig. 3 an jedem Blockiervorsprung 23 ein Rastvorsprung 24 zum Zusammenwirken mit einem an dem Haltekragen 10 des Halteelementes 4 vorgesehenen Rastrücksprung 25 - siehe Fig. 1, 2, 3, und 4 - angeordnet. Die Rastvorsprünge 24 verrasten mit dem Rastrücksprung 25 formschlüssig.

Auf dem Umfang ist zwischen zwei Blockiervorsprüngen 23 jeweils eine erste Ausnehmung 26 ausgebildet. Ferner ist auf dem Umfang zwischen zwei Kragenrastmitteln 12 am Halteelement 4 jeweils eine zweite Ausnehmung 27 ausgebildet. Im Montagezustand sind die ersten und zweiten Ausnehmungen 26, 27 überdeckend ausgerichtet, wodurch eine Anlage des Fluidleitungselementes 2 am Halteelement 4, insbesondere am Haltekragen 10, durch die Ausnehmungen 26, 27 optisch prüfbar ist (siehe insbesondere Fig. 3). Das Fluidleitungselement 2 ist bei korrekter Montage durch die Ausnehmungen 26, 27 erkennbar.

Fig. 3 und Fig. 6 zeigen Ausführungsbeispiele von Anschlusssystemen 1 in vollständig montiertem Zustand. In das Halteelement 4 ist ein Verbindungsstutzen 3 eingebracht, der durch die ersten Rastvorsprünge 11b, die an der Anformkontur 13 anliegen, und durch den Anschlagkragen 15 in dem Halteelement 4 gehalten wird. Die ersten Rastvorsprünge 11b und die zweiten Rastvorsprünge 17b stabilisieren den Verbindungsstutzen 3 gegen Verkippen in radialer Richtung (siehe auch Verteilung der Rastvorsprünge 11b, 17b über den Umfang gemäß Fig. 5b). Das Dichtmittel 19 liegt mit dem Innendichtabschnitt 19b dichtend an der kreiszylindrischen Fläche 16 des Verbindungsstutzens 3 an. Ferner liegt der Außendichtabschnitt 19a dichtend an einem Innenumfang des Fluidleitungselementes 2 an. Das Halteelement 4 ist in das erste Ende 6 des Fluidleitungselementes 2 eingeschoben, wobei die Kragenrastmittel 12 verrastend mit dem Umfangsrastmittel 7, insbesondere mit der Rastkante 7a, zusammenwirken. Das Verriegelungselement 5 ist außenumfänglich auf das Fluidleitungselement 2 und die Kragenrastmittel 12 aufgeschoben, so dass diese durch das Verriegelungselement 5 in ihrem verrasteten Zustand mit dem Umfangsrastmittel 7 gehalten werden. Das Verriegelungselement 5 wird durch die formschlüssige Verrastung der Vorsprünge 24 mit dem umlaufenden Rastrücksprung 25 in seiner Montageposition gehalten. Zwischen Verriegelungselement 5 und Fluidleitungselement 2, insbesondere im zweiten Abschnitt 5b des Verriegelungselements, ist eine Übergangspassung ausgebildet. Der Verbindungsstutzen 3 kann sich nicht aus dem Halteelement 4 lösen, weil das Fluidleitungselement 2 ein Ausweichen der ersten Stutzenrastmittel 11 und der zweiten Stutzenrastmittel 17 in radialer Richtung verhindert.

Bei dem Ausführungsbeispiel der Fig. 6 weist das Fluidleitungselement 2 am ersten Ende 6 einen rohr- oder topfförmigen Abschnitt 28 und im weiteren Verlauf einen Abschnitt 29 mit Dornprofil zum weiteren Anschluss, beispielsweise an ein Rohr oder einen Schlauch, auf. Die Funktion des Halteelementes 4 sowie des Verriegelungselementes 5 und das Zusammenwirken mit dem Fluidleitungselement 2 sind wie vorstehend beschrieben ausgebildet.

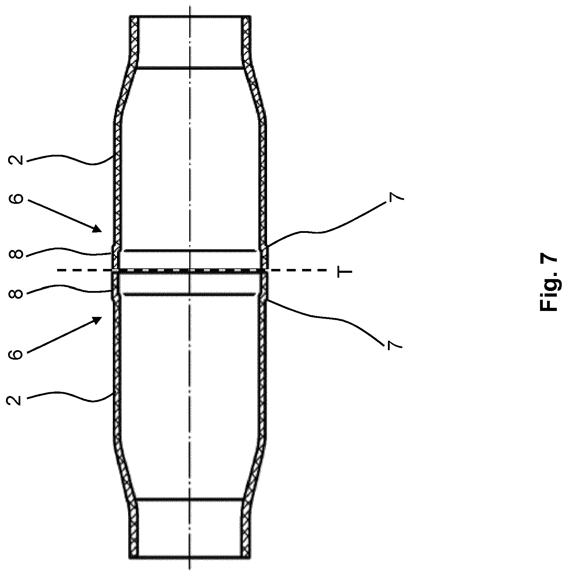

Fig. 7 zeigt zwei Fluidleitungselemente 2 für ein Ausführungsbeispiel eines Anschlusssystems 1, beispielsweise gemäß den Ausführungsbeispielen in Fig. 1, 2 und 3. Aus Gründen der Übersichtlichkeit sind nur die Enden 6 der Fluidleitungselemente 2 dargestellt. Die Fluidleitungselemente 2 werden in einem Korrugator hergestellt, und zwar derart, dass die beiden ersten Enden 6 aneinander anliegen und der Durchmesser gemeinsam erweitert wird. Ferner wird die Aufweitung 8 zum Herstellen des Umfangsrastmittels 7 erstellt. Anschließend erfolgt ein Trennen der Fluidleitungselemente 2 in der Trennebene T.

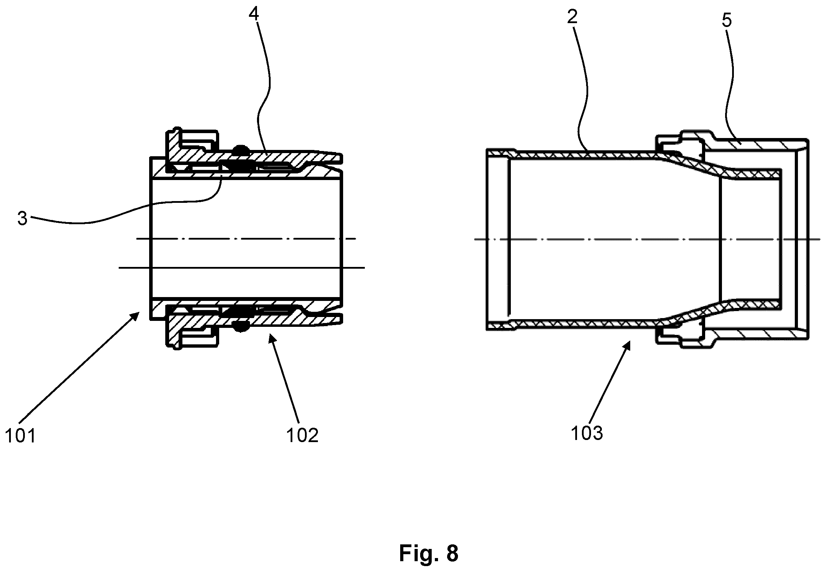

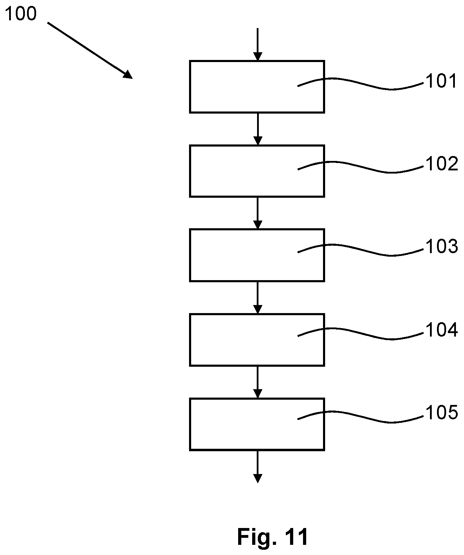

Fig. 11 zeigt schematisch den Ablauf eines Ausführungsbeispiels eines Verfahrens 100 zur Montage eines Anschlusssystems 1. Die Arbeitsgänge zu den Verfahrensschritten sind ferner in den Fig. 8 bis 10 dargestellt. Zunächst erfolgt ein Bereitstellen 101 eines Verbindungsstutzens 3, der mit einem Anschlusssystem 1 verbunden werden soll (siehe auch Fig. 8). Nachfolgend erfolgt ein Einbringen 102 des Verbindungsstutzens 3 in den Aufnahmeraum 9 eines Halteelementes 4, so dass erste Stutzenrastmittel 11 des Halteelementes 4 an einer Anformkontur 13 des Verbindungsstutzens 3 anliegen. Dadurch wird der Verbindungsstutzen 3 in dem Halteelement 4 fixiert. Dieser Schritt ist ebenfalls in Fig. 8 auf der linken Seite dargestellt.

Ferner erfolgt das Aufbringen 103 eines Verriegelungselementes 5 auf das Fluidleitungselement 2, was gemäß Fig. 8 auf der rechten Seite dargestellt ist. Das Verriegelungselement 5 wird in einer Vormontageposition gehalten, in der es lose auf dem Umfang des Fluidleitungselements 2 bewegbar ist.

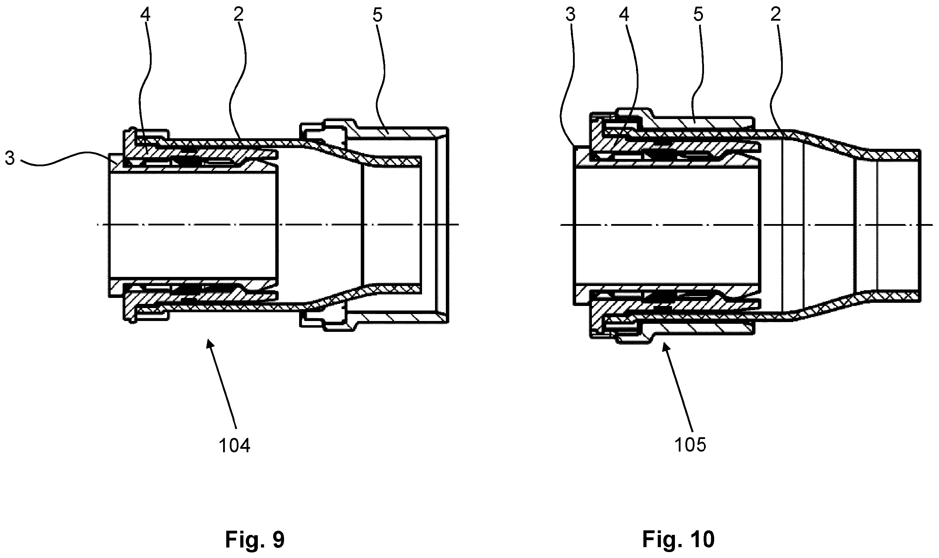

Nachfolgend erfolgt ein Einbringen 104 des Halteelementes 4 in das Fluidleitungselement 2, insbesondere in ein erstes Ende 6 des Fluidleitungselementes 2, unter Verrastung von Kragenrastarmen 12 mit mindestens einem Umfangsrastmittel 7 auf einem Außenumfang des Fluidleitungselementes 2 gemäß Fig. 9. Das Verriegelungselement 5 ist zunächst weiterhin so angeordnet, dass es das Fluidleitungselement 2 umgibt, aber noch nicht in seine Montageposition gebracht ist.

Abschließend erfolgt ein Aufschieben 105 des Verriegelungselementes 5 zumindest auf die Kragenrastarme 12 des Halteelementes 4 gemäß Fig. 10, wobei die Rastvorsprünge 24 mit den Rastrücksprüngen 25 am Haltekragen 10 des Halteelementes 4 verrasten. Dadurch wird ein Lösen der Kragenrastmittel 12 aus der Verrastung mit dem Umfangsrastmittel 7 durch das Verriegelungselement 5 verhindert.

Eine bevorzugte Ausgestaltung des Verfahrens sieht vor, dass das Verriegelungselement 5 auf den Außenumfang des Fluidleitungselementes 2 aufgebracht 103 wird, bevor das Halteelement 4 in das erste Ende 6 des Fluidleitungselementes 2 eingebracht 104 wird.

Die Erfindung ist durch die angehängten Ansprüche definiert und nicht auf die dargestellten und beschriebenen Ausführungsbeispiele beschränkt. Es wird ausdrücklich betont, dass die Ausführungsbeispiele nicht auf alle Merkmale in Kombination beschränkt sind.

### Bezugszeichenliste

- 1: Anschlusssystem
- 2: Fluidleitungselement
- 3: Verbindungsstutzen
- 4: Halteelement
- 5: Verriegelungselement
- 5a: Erster Abschnitt
- 5b: Zweiter Abschnitt
- 6: Erstes Ende des Fluidleitungselementes
- 7: Umfangsrastmittel
- 7a: Rastkante
- 8: Aufweitung
- 9: Aufnahmeraum
- 9a: Einbringöffnung
- 10: Haltekragen
- 11: Erste Stutzenrastmittel
- 11a: Erster Rastarm
- 11b: Erster Rastvorsprung
- 12: Kragenrastmittel
- 13: Anformkontur
- 14: Erstes Ende des Verbindungsstutzens
- 15: Anschlagkragen
- 16: Kreiszylindrischer Abschnitt
- 17: Zweite Stutzenrastmittel
- 17a: Zweiter Rastarm
- 17b: Zweiter Rastvorsprung
- 18: Mittelsteg
- 18a: Nut
- 19: Dichtmittel
- 19a: Außendichtabschnitt
- 19b: Innendichtabschnitt
- 20: Einspritzkanäle
- 21: Flaches Montageflankenprofil
- 22: Steiles Blockadeflankenprofil
- 23: Blockiervorsprünge
- 24: Rastvorsprung
- 25: Rastrücksprung
- 26: Erste Ausnehmung
- 27: Zweite Ausnehmung
- 28: Rohrförmiger Abschnitt des Fluidleitungselementes
- 29: Abschnitt des Fluidleitungselementes mit Dornprofil

- 100: Verfahren
- 101: Bereitstellen des Verbindungsstutzens
- 102: Einbringen des Verbindungsstutzens in den Aufnahmeraum
- 103: Aufbringen des Verriegelungselementes
- 104: Einbringen des Halteelementes
- 105: Aufschieben des Verriegelungselementes

- L: Längsachse von 4
- T: Trennebene

## Patentansprüche

1. Anschlusssystem (1) zum Anschluss an einen Verbindungsstutzen (3), aufweisend mindestens ein Fluidleitungselement (2) und mindestens ein Halteelement (4),
wobei das Fluidleitungselement (2) zumindest an einem ersten Ende (6) rohrförmig ausgebildet ist, wobei das Fluidleitungselement (2) an dem ersten Ende (6) auf mindestens einem Außenumfang mindestens ein Umfangsrastmittel (7) aufweist,
wobei das Halteelement (4) mindestens einen Aufnahmeraum (9) für einen Verbindungsstutzen (3) definiert und mindestens einen Haltekragen (10) aufweist, wobei eine Mehrzahl radialelastischer erster Stutzenrastmittel (11) in den Aufnahmeraum (9) ragen, wobei sich der Haltekragen (10) in radialer Richtung nach außen weg erstreckt und eine Mehrzahl zu einer Längsachse (L) des Halteelements (4) parallel verlaufende Kragenrastmittel (12) aufweist, wobei das Halteelement (4) an dem ersten Ende (6) zumindest teilweise in das Fluidleitungselement (2) einbringbar ist, bis die das Fluidleitungselement (2) außenumfänglich übergreifenden Kragenrastmittel (12) verrastend mit dem Umfangsrastmittel (7) zusammenwirken,
wobei das Halteelement (4) mindestens ein über mindestens einen Umfang verlaufendes Dichtmittel (19) aufweist,
**dadurch gekennzeichnet, dass**
das Halteelement (4) und das Dichtmittel (19) aus unterschiedlichen Materialien einstückig als Zweikomponentenbauteil ausgebildet sind.

2. Anschlusssystem (1) nach Anspruch 1,
**dadurch gekennzeichnet, dass**
ferner mindestens ein Verriegelungselement (5) vorhanden ist, und dass das Verriegelungselement (5) im in das Fluidleitungselement (6) eingebrachten Zustand des Halteelements (4) derart zumindest mit den Kragenrastmitteln (12) zusammenwirkbar aufbringbar ist, dass ein Lösen der Kragenrastmittel (12) aus der Verrastung mit dem Umfangsrastmittel (7) durch das Verriegelungselement (5) verhindert wird.

3. Anschlusssystem (1) nach Anspruch 2,
**dadurch gekennzeichnet, dass**
eine Mehrzahl radialelastischer zweiter Stutzenrastmittel (17) in den Aufnahmeraum (9) ragen, insbesondere dass die ersten Stutzenrastmittel (11) und die zweiten Stutzenrastmittel (17) entlang einer Längsachse (L) des Halteelements (4) einen vorbestimmten Abstand zueinander aufweisen.

4. Anschlusssystem (1) nach Anspruch 3,
**dadurch gekennzeichnet, dass**
die ersten Stutzenrastmittel (11) und die zweiten Stutzenrastmittel (17) einstückig miteinander verbunden sind, insbesondere dass auch der Haltekragen (10) einstückig mit den ersten Stutzenrastmitteln (11) und/oder den zweiten Stutzenrastmitteln (17) ausgebildet ist.

5. Anschlusssystem (1) nach einem der Ansprüche 1 bis 4,
**dadurch gekennzeichnet, dass**
jedes erste Stutzenrastmittel (11) einen ersten Rastarm (11a) und mindestens einen ersten Rastvorsprung (11b) aufweist, und dass der erste Rastvorsprung (11b) im Verlauf des ersten Rastarms (11a), insbesondere in mindestens einem Endbereich des Rastarms (11a) angeordnet ist, bevorzugt dass sich die ersten Rastarme (11b) im Wesentlichen parallel zu einer Längsachse (L) des Halteelements (4) erstrecken.

6. Anschlusssystem (1) nach einem der Ansprüche 1 bis 5,
**dadurch gekennzeichnet, dass**
die ersten Stutzenrastmittel (11) derart ausgebildet und angeordnet sind, dass sie einen kreiszylindrischen Abschnitt (16) eines Verbindungsstutzens (3) stabilisierend umfassen.

7. Anschlusssystem (1) nach einem der Ansprüche 1 bis 6,
**dadurch gekennzeichnet, dass**
sich das Dichtmittel (19) mit einem Außendichtabschnitt (19a) auf einem Außenumfang, bevorzugt zur dichtenden Anlage an einer Innenfläche des Fluidleitungselements (2), und/oder mit einem Innendichtabschnitt (19b) auf einem Innenumfang, bevorzugt zur dichtenden Anlage an einen in den Aufnahmeraum (9) einbringbaren Verbindungsstutzen (3), erstreckt.

8. Anschlusssystem (1) nach Anspruch 7,
**dadurch gekennzeichnet, dass**
das Dichtmittel (19) einen Innendichtabschnitt(19b) aufweist, der zumindest teilweise in den Aufnahmeraum (9) hineinragt, und dass der Innendichtabschnitt (19b) einen Querschnitt mit einem flachen Montageflankenprofil (21) in Richtung einer Einbringöffnung (9a) für den Verbindungsstutzen (3) und einem steilen Blockadeflankenprofil (22) auf einer von der Einbringöffnung (9a) abgewandten Seite aufweist.

9. Anschlusssystem (1) nach einem der Ansprüche 1 bis 8,
**dadurch gekennzeichnet, dass**
das Halteelement (4) eine Mehrzahl von Einspritzkanälen (20) aufweist, und dass das Dichtmittel (19) durch die Einspritzkanäle (20) eingespritzt ist, insbesondere dass sich die Einspritzkanäle (20) parallel zu einer Längsachse (L) des Halteelements (4) erstrecken.

10. Anschlusssystem (1) nach einem der Ansprüche 2 bis 9,
**dadurch gekennzeichnet, dass**
das Verriegelungselement (5) mit dem Haltekragen (10) und/oder mit den Kragenrastmitteln (12) verrastbar ist, um in einer die Kragenrastmittel (12) blockierenden Montageposition fixiert zu werden und/oder dass das Verriegelungselement (5) eine Mehrzahl von Blockiervorsprüngen (23) aufweist, und dass jeder Blockiervorsprung (23) im montierten Zustand mit jeweils einem Kragenrastmittel (12) zusammenwirkt, insbesondere dass zwischen zwei Blockiervorsprüngen (23) jeweils eine erste Ausnehmung (26) ausgebildet ist, dass zwischen zwei Kragenrastmitteln (12) jeweils eine zweite Ausnehmung (27) ausgebildet ist, und dass im Montagezustand die ersten und zweiten Ausnehmungen (26,27) überdeckend ausgerichtet sind, so dass eine Anlage des Fluidleitungselements (2) am Halteelement (4) durch die Ausnehmungen (26,27) optisch prüfbar ist.

11. Anschlusssystem (13) nach einem der Ansprüche 1 bis 10,
**dadurch gekennzeichnet, dass**
das Haltelement (4) aus Polyamid 66 (PA66) mit einem Glasfaseranteil zwischen 0 % und 50%, insbesondere mit einem Glasfaseranteil von 30% (GF30) hergestellt ist und/oder dass das Dichtmittel aus einem Elastomer, insbesondere einem Silikon-Elastomer, gefertigt ist und/oder dass das Dichtmittel ein Flüssigsilikonkautschuk (LSR) aufweist, insbesondere aus einem Flüssigsilikonkautschuk (LSR) hergestellt ist.

12. Verfahren (100) zur Montage eines Anschlusssystems (1) zum Verbinden eines Fluidleitungselements (2) mit einem Verbindungsstutzen (3), nach einem der Ansprüche 1 bis 11,
**dadurch gekennzeichnet, dass**
zumindest folgende Verfahrensschritte umfasst sind,
- Bereitstellen (101) eines Verbindungsstutzens (3), der mit einem Fluidleitungselement (2) verbunden werden soll,
- Aufbringen (102) eines Halteelements (4) auf den Verbindungsstutzen (3), so dass erste Stutzenrastmittel (11) des Haltelements (4) an einer Erhebung (13) des Verbindungsstutzens (3) anliegen, wodurch das Halteelement (4) auf dem Verbindungsstutzen (3) fixiert ist,
- Einbringen (104) des Halteelements (4) in das Fluidleitungselement (2) unter Verrastung von Kragenrastmitteln (12) des Halteelements (4) mit mindestens einem Umfangsrastmittel (7) auf einem Außenumfang des Fluidleitungselements (2).

13. Verfahren (100) nach Anspruch 12,
**dadurch gekennzeichnet, dass**
vor dem Einbringen (104) des Halteelements (4) in das Fluidleitungselement (2) ein Aufbringen (103) eines Verriegelungselements (5) auf den Außenumfang des Fluidleitungselements (2) erfolgt, insbesondere dass nach dem Einbringen (104) des Halteelements (4) in das Fluidleitungselement (2) ein Aufschieben (105) des Verriegelungselements (5) zumindest auf die Kragenrastmittel (12) des Haltelements (4) erfolgt, wodurch ein Lösen der Kragenrastmittel (12) aus der Verrastung mit dem Umfangsrastmittel (7) durch das Verriegelungselement (5) verhindert wird.

## Claims

1. Connection system (1) for connection to a connecting stub (3), comprising at least one fluid line element (2) and at least one holding element (4), wherein the fluid line element (2) is configured in a tubular manner at least at a first end (6), wherein the fluid line element (2) has at least one circumferential latching means (7) on at least one outer circumference at the first end (6), wherein the holding element (4) defines at least one receiving space (9) for a connecting stub (3) and has at least one holding collar (10), wherein a plurality of radially elastic first stub latching means (11) project into the receiving space (9), wherein the holding collar (10) extends outwardly in a radial direction and has a plurality of collar latching means (12) extending parallel to a longitudinal axis (L) of the holding element (4), wherein the holding element (4) can be introduced at least partially into the fluid line element (2) at the first end (6) until the collar latching means (12) engaging over the outer circumference of the fluid line element (2) cooperate in a latching manner with the circumferential latching means (7), wherein the holding element (4) has at least one sealing means (19) extending over at least one circumference, **characterised in that** the holding element (4) and the sealing means (19) are formed integrally as a two-component part from different materials.

2. Connection system (1) according to claim 1, **characterised in that** at least one locking element (5) is furthermore present, and **in that** the locking element (5) can be applied in the state of the holding element (4) introduced into the fluid line element (6) in such a manner that it cooperates at least with the collar latching means (12) such that release of the collar latching means (12) from the latching engagement with the circumferential latching means (7) is prevented by the locking element (5).

3. Connection system (1) according to claim 2, **characterised in that** a plurality of radially elastic second stub latching means (17) project into the receiving space (9), in particular **in that** the first stub latching means (11) and the second stub latching means (17) have a predetermined spacing from one another along a longitudinal axis (L) of the holding element (4).

4. Connection system (1) according to claim 3, **characterised in that** the first stub latching means (11) and the second stub latching means (17) are integrally connected to one another, in particular **in that** the holding collar (10) is also formed integrally with the first stub latching means (11) and/or the second stub latching means (17).

5. Connection system (1) according to any one of claims 1 to 4, **characterised in that** each first stub latching means (11) has a first latching arm (11a) and at least one first latching projection (11b), and **in that** the first latching projection (11b) is arranged in the course of the first latching arm (11a), in particular in at least one end region of the latching arm (11a), preferably **in that** the first latching arms (11b) extend substantially parallel to a longitudinal axis (L) of the holding element (4).

6. Connection system (1) according to any one of claims 1 to 5, **characterised in that** the first stub latching means (11) are configured and arranged such that they encompass a circular cylindrical section (16) of a connecting stub (3) in a stabilising manner.

7. Connection system (1) according to any one of claims 1 to 6, **characterised in that** the sealing means (19) extends with an outer sealing section (19a) on an outer circumference, preferably for sealing abutment against an inner surface of the fluid line element (2), and/or with an inner sealing section (19b) on an inner circumference, preferably for sealing abutment against a connecting stub (3) introducible into the receiving space (9).

8. Connection system (1) according to claim 7, **characterised in that** the sealing means (19) has an inner sealing section (19b) which projects at least partially into the receiving space (9), and **in that** the inner sealing section (19b) has a cross-section with a flat assembly flank profile (21) in the direction of an introduction opening (9a) for the connecting stub (3) and a steep blocking flank profile (22) on a side facing away from the introduction opening (9a).

9. Connection system (1) according to any one of claims 1 to 8, **characterised in that** the holding element (4) has a plurality of injection channels (20), and **in that** the sealing means (19) is injected through the injection channels (20), in particular **in that** the injection channels (20) extend parallel to a longitudinal axis (L) of the holding element (4).

10. Connection system (1) according to any one of claims 2 to 9, **characterised in that** the locking element (5) can be latched with the holding collar (10) and/or with the collar latching means (12) in order to be fixed in an assembly position blocking the collar latching means (12) and/or **in that** the locking element (5) has a plurality of blocking projections (23), and **in that** each blocking projection (23) cooperates with a respective collar latching means (12) in the assembled state, in particular **in that** a first recess (26) is formed between two blocking projections (23) in each case, **in that** a second recess (27) is formed between two collar latching means (12) in each case, and **in that** in the assembly state the first and second recesses (26, 27) are aligned in an overlapping manner such that abutment of the fluid line element (2) against the holding element (4) can be optically checked through the recesses (26, 27).

11. Connection system (13) according to any one of claims 1 to 10, **characterised in that** the holding element (4) is manufactured from polyamide 66 (PA66) with a glass fibre content of between 0% and 50%, in particular with a glass fibre content of 30% (GF30) and/or **in that** the sealing means is manufactured from an elastomer, in particular a silicone elastomer, and/or **in that** the sealing means comprises a liquid silicone rubber (LSR), in particular is manufactured from a liquid silicone rubber (LSR).

12. Method (100) for assembling a connection system (1) for connecting a fluid line element (2) to a connecting stub (3), according to any one of claims 1 to 11, **characterised in that** at least the following method steps are comprised,
- providing (101) a connecting stub (3) which is to be connected to a fluid line element (2),
- applying (102) a holding element (4) onto the connecting stub (3) such that first stub latching means (11) of the holding element (4) abut against an elevation (13) of the connecting stub (3), whereby the holding element (4) is fixed on the connecting stub (3),
- introducing (104) the holding element (4) into the fluid line element (2) with latching of collar latching means (12) of the holding element (4) with at least one circumferential latching means (7) on an outer circumference of the fluid line element (2).

13. Method (100) according to claim 12, **characterised in that** before the introduction (104) of the holding element (4) into the fluid line element (2), an application (103) of a locking element (5) onto the outer circumference of the fluid line element (2) takes place, in particular **in that** after the introduction (104) of the holding element (4) into the fluid line element (2), a sliding (105) of the locking element (5) at least onto the collar latching means (12) of the holding element (4) takes place, whereby a release of the collar latching means (12) from the latching engagement with the circumferential latching means (7) is prevented by the locking element (5).

## Revendications

1. Système de raccordement (1) pour le raccordement à un embout de connexion (3), comprenant au moins un élément de conduite de fluide (2) et au moins un élément de retenue (4),
l'élément de conduite de fluide (2) étant de forme tubulaire au moins à une première extrémité (6), l'élément de conduite de fluide (2) présentant à la première extrémité (6) au moins un moyen d'encliquetage périphérique (7) sur au moins une circonférence extérieure,
l'élément de retenue (4) définissant au moins un espace de réception (9) pour un embout de connexion (3) et présentant au moins un collet de retenue (10), une pluralité de premiers moyens d'encliquetage d'embout (11) radialement élastiques faisant saillie dans l'espace de réception (9), le collet de retenue (10) s'étendant vers l'extérieur dans la direction radiale et présentant une pluralité de moyens d'encliquetage de collet (12) s'étendant parallèlement à un axe longitudinal ( L ) de l'élément de retenue (4), l'élément de retenue (4) pouvant être introduit au moins partiellement dans l'élément de conduite de fluide (2) à la première extrémité (6), jusqu'à ce que les moyens d'encliquetage de collet (12) entourant l'élément de conduite de fluide (2) sur sa circonférence extérieure coopèrent par encliquetage avec le moyen d'encliquetage périphérique (7), l'élément de retenue (4) présentant au moins un moyen d'étanchéité (19) s'étendant sur au moins une circonférence, **caractérisé en ce que**
l'élément de retenue (4) et le moyen d'étanchéité (19) sont réalisés d'une seule pièce en tant que composant bi-matière à partir de matériaux différents.

2. Système de raccordement (1) selon la revendication 1, **caractérisé en ce qu'** au moins un élément de verrouillage (5) est en outre présent, et **en ce que** l'élément de verrouillage (5) peut être appliqué de manière à coopérer au moins avec les moyens d'encliquetage de collet (12) dans l'état de l'élément de retenue (4) introduit dans l'élément de conduite de fluide (6), de telle sorte qu'un dégagement des moyens d'encliquetage de collet (12) de l'encliquetage avec le moyen d'encliquetage périphérique (7) est empêché par l'élément de verrouillage (5).

3. Système de raccordement (1) selon la revendication 2, **caractérisé en ce qu'** une pluralité de seconds moyens d'encliquetage d'embout (17) radialement élastiques font saillie dans l'espace de réception (9), en particulier **en ce que** les premiers moyens d'encliquetage d'embout (11) et les seconds moyens d'encliquetage d'embout (17) présentent un écartement prédéterminé l'un par rapport à l'autre le long d'un axe longitudinal (L) de l'élément de retenue (4).

4. Système de raccordement (1) selon la revendication 3, **caractérisé en ce que** les premiers moyens d'encliquetage d'embout (11) et les seconds moyens d'encliquetage d'embout (17) sont reliés d'une seule pièce, en particulier **en ce que** le collet de retenue (10) est également réalisé d'une seule pièce avec les premiers moyens d'encliquetage d'embout (11) et/ou les seconds moyens d'encliquetage d'embout (17).

5. Système de raccordement (1) selon l'une des revendications 1 à 4 , **caractérisé en ce que** chaque premier moyen d'encliquetage d'embout (11) présente un premier bras d'encliquetage (11a) et au moins une première saillie d'encliquetage (11b), et **en ce que** la première saillie d'encliquetage (11b) est disposée dans le tracé du premier bras d'encliquetage (11a), en particulier dans au moins une zone d'extrémité du bras d'encliquetage (11a), de préférence **en ce que** les premiers bras d'encliquetage (11b) s'étendent essentiellement parallèlement à un axe longitudinal (L) de l'élément de retenue (4).

6. Système de raccordement (1) selon l'une des revendications 1 à 5, **caractérisé en ce que** les premiers moyens d'encliquetage d'embout (11) sont réalisés et disposés de telle sorte qu'ils entourent de manière stabilisante une section cylindrique circulaire (16) d'un embout de connexion (3).

7. Système de raccordement (1) selon l'une des revendications 1 à 6 , **caractérisé en ce que** le moyen d'étanchéité (19) s'étend avec une section d'étanchéité extérieure (19a) sur une circonférence extérieure, de préférence pour une application étanche contre une surface intérieure de l'élément de conduite de fluide (2), et/ou avec une section d'étanchéité intérieure (19b) sur une circonférence intérieure, de préférence pour une application étanche contre un embout de connexion (3) pouvant être introduit dans l'espace de réception (9).

8. Système de raccordement (1) selon la revendication 7, **caractérisé en ce que** le moyen d'étanchéité (19) présente une section d'étanchéité intérieure (19b) qui fait saillie au moins partiellement dans l'espace de réception (9), et **en ce que** la section d'étanchéité intérieure (19b) présente une section transversale avec un profil de flanc de montage plat (21) en direction d'une ouverture d'introduction (9a) pour l'embout de connexion (3) et un profil de flanc de blocage raide (22) sur un côté opposé à l'ouverture d'introduction (9a).

9. Système de raccordement (1) selon l'une des revendications 1 à 8, **caractérisé en ce que** l'élément de retenue (4) présente une pluralité de canaux d'injection (20), et **en ce que** le moyen d'étanchéité (19) est injecté à travers les canaux d'injection (20), en particulier **en ce que** les canaux d'injection (20) s'étendent parallèlement à un axe longitudinal (L) de l'élément de retenue (4).

10. Système de raccordement (1) selon l'une des revendications 2 à 9, **caractérisé en ce que** l'élément de verrouillage (5) peut être encliqueté avec le collet de retenue (10) et/ou avec les moyens d'encliquetage de collet (12), afin d'être fixé dans une position de montage bloquant les moyens d'encliquetage de collet (12) et/ou **en ce que** l'élément de verrouillage (5) présente une pluralité de saillies de blocage (23), et **en ce que** chaque saillie de blocage (23) coopère à l'état monté avec respectivement un moyen d'encliquetage de collet (12), en particulier **en ce qu'**un premier évidement (26) est formé respectivement entre deux saillies de blocage (23), **en ce qu'**un second évidement (27) est formé respectivement entre deux moyens d'encliquetage de collet (12), et **en ce qu'**à l'état de montage les premiers et seconds évidements (26, 27) sont orientés de manière superposée, de sorte qu'une application de l'élément de conduite de fluide (2) sur l'élément de retenue (4) peut être vérifiée optiquement à travers les évidements (26, 27).

11. Système de raccordement (13) selon l'une des revendications 1 à 10, **caractérisé en ce que** l'élément de retenue (4) est fabriqué en polyamide 66 (PA66) avec une teneur en fibres de verre comprise entre 0% et 50%, en particulier avec une teneur en fibres de verre de 30 % (GF30) et/ou **en ce que** le moyen d'étanchéité est fabriqué à partir d'un élastomère, en particulier un élastomère de silicone, et/ou **en ce que** le moyen d'étanchéité comprend un caoutchouc de silicone liquide (LSR), en particulier est fabriqué à partir d'un caoutchouc de silicone liquide (LSR).

12. Procédé (100) de montage d'un système de raccordement (1) pour relier un élément de conduite de fluide (2) à un embout de connexion (3), selon l'une des revendications 1 à 11,
**caractérisé en ce qu'**
au moins les étapes de procédé suivantes sont comprises,
- mise à disposition (101) d'un embout de connexion (3) devant être relié à un élément de conduite de fluide (2),
- application (102) d'un élément de retenue (4) sur l'embout de connexion (3), de sorte que des premiers moyens d'encliquetage d'embout (11) de l'élément de retenue (4) viennent en appui contre une élévation (13) de l'embout de connexion (3), par quoi l'élément de retenue (4) est fixé sur l'embout de connexion (3),
- introduction (104) de l'élément de retenue (4) dans l'élément de conduite de fluide (2) avec encliquetage de moyens d'encliquetage de collet (12) de l'élément de retenue (4) avec au moins un moyen d'encliquetage périphérique (7) sur une circonférence extérieure de l'élément de conduite de fluide (2).

13. Procédé ( 100 ) selon la revendication 12, **caractérisé en ce qu'** avant l'introduction (104) de l'élément de retenue (4) dans l'élément de conduite de fluide (2), une application (103) d'un élément de verrouillage (5) sur la circonférence extérieure de l'élément de conduite de fluide (2) est effectuée, en particulier **en ce qu'**après l'introduction (104) de l'élément de retenue (4) dans l'élément de conduite de fluide (2), un coulissement (105) de l'élément de verrouillage (5) au moins sur les moyens d'encliquetage de collet (12) de l'élément de retenue (4) est effectué, par quoi un dégagement des moyens d'encliquetage de collet (12) de l'encliquetage avec le moyen d'encliquetage périphérique (7) est empêché par l'élément de verrouillage (5).
